# EUROPEAN PATENT SPECIFICATION

(11) **EP 1 348 680 B1**
(45) Date of publication and mention of the grant of the patent: **23.07.2008**
(21) Application number: 03251862.3
(22) Date of filing: 25.03.2003
(51) Int. Cl.: C04B 35/453, C04B 35/495, H01P 7/10, C01G 9/00, C01G 33/00, C01G 35/00

(54) **Dielectric ceramic composition and resonator**
Dielektrische Keramikzusammensetzung und Resonator
Composition céramique diélectrique et résonateur

(30) Priority: 26.03.2002 JP 2002086482
(43) Date of publication of application: 01.10.2003
(73) Proprietor: NGK Spark Plug Company Limited, Nagoya, Aichi (JP)
(72) Inventor: Oba, Takashi, Ise-shi, Mie (JP); Koduka, Hisashi, Bisai-shi, Aichi (JP); Itakura, Kazuhisa, Komaki-shi, Aichi (JP)
(74) Representative: Jacob, Reuben Ellis

(56) References cited:
- EP-A- 0 838 446
- PATENT ABSTRACTS OF JAPAN vol. 017, no. 257 (E-1368), 20 May 1993 (1993-05-20) -& JP 05 002917 A (UBE IND LTD), 8 January 1993 (1993-01-08)
- DATABASE WPI Section Ch, Week 198547 Derwent Publications Ltd., London, GB; Class L02, AN 1985-292886 XP002289987 -& JP 60 200855 A (UBE IND LTD) 11 October 1985 (1985-10-11)
- PATENT ABSTRACTS OF JAPAN vol. 002, no. 096 (E-048), 11 August 1978 (1978-08-11) -& JP 53 060540 A (MATSUSHITA ELECTRIC IND CO LTD), 31 May 1978 (1978-05-31)

## Description

This invention relates to a dielectric ceramic composition and to a dielectric resonator. It relates more particularly to a dielectric ceramic composition which, when employed in a high-frequency region, maintains a high unloaded quality factor (Qᵤ) and permits arbitrary regulation of relative dielectric constant (εᵣ) and the temperature coefficient (τ_{f}) of resonance frequency (fₒ) within specific ranges in accordance with use characteristics of the composition, and to a dielectric resonator comprising a resonator main body formed from the composition.

Some dielectric ceramic compositions have been employed in high-frequency regions and are suitable for use in a variety of products, including dielectric resonators, dielectric antennas, dielectric waveguides, dielectric substrates for microwave integrated circuits (MICs) and multi-layer ceramic capacitors.

Such dielectric ceramic compositions must satisfy the following requirements in accordance with use characteristics thereof:
1. high unloaded quality factor (Qᵤ);
2. high relative dielectric constant (εᵣ) which can be regulated; and
3. small absolute value of the temperature coefficient (τ_{f}) of resonance frequency (fₒ) which can be regulated within a narrow range.

JP5-2917 and JP 60-200855 disclose dielectric ceramic compositions containing Ba, Zn, Mg, Nb, Ta and Sb.

Dielectric ceramic compositions which have been proposed for use in high-frequency regions include that containing Ba, Nb, Sb and O₂ (Japanese Patent Application Laid-Open (kokai) No. 62-190608), and that containing Ba, Zn, Ta and K (Japanese Patent Application Laid-Open (kokai) No. 11-71173).

Although such dielectric ceramic compositions have a relatively high unloaded quality factor (Qᵤ), they encounter difficulty in regulating relative dielectric constant (εᵣ) and the temperature coefficient (τ_{f}) of resonance frequency (fₒ) in accordance with their use, for example as a dielectric resonator, a dielectric antenna, a dielectric waveguide, a dielectric substrate for a microwave integrated circuit (MIC) or a multi-layer ceramic capacitor. Therefore, when the dielectric ceramic composition is produced, an appropriate metallic component must be selected in accordance with the intended use and this requires an intricate production process.

The present invention seeks to solve the above-noted problems by providing a dielectric ceramic composition which maintains a high unloaded quality factor (Qᵤ) and permits arbitrary regulation of the relative dielectric constant (εᵣ) and the temperature coefficient (τ_{f}) of resonance frequency (fₒ) within specific ranges in accordance with the use characteristics of the composition, and by providing a dielectric resonator comprising a resonator main body formed from the composition.

Accordingly, in a first aspect, the present invention provides a dielectric ceramic composition comprising, as metallic components, Ba, Zn, Nb, Ta, and Sb, characterized in that the mol % amounts of the metallic components as their oxides are:
57.6 ≤ BaO ≤ 61.5
17.0 ≤ ZnO ≤ 20.0
6.0 ≤ Nb₂O₅ ≤ 17.0
6.0 ≤ Ta₂O₅ ≤ 13.0
1.0 ≤ Sb₂O₃ ≤ 2.3
The composition further comprises an alkali metal (M) as a further metallic component.

Preferably, the mol % amount of the alkali metal as its oxide being
0 < M₂O ≤ 1.95
and the total mol % of all metallic oxides being 100.

Preferably, the alkali metal is K.

In a second aspect, the present invention provides also a dielectric resonator characterized by comprising a resonator main body formed from the dielectric ceramic composition according to the first aspect of the invention.

In the dielectric ceramic composition of the invention, the amounts of Ba, Zn, Nb, Ta and Sb as their oxides, are
57.6 ≤ BaO ≤ 61.5
17.0 ≤ ZnO ≤ 20.0
6.0 ≤ Nb₂O₅ ≤ 17.0
6.0 ≤ Ta₂O₅ ≤ 13.0
1.0 ≤ Sb₂O₃ ≤ 2.3

When the amount of BaO is less than 57.5 mol% the dielectric ceramic composition fails to exhibit sufficiently high unloaded quality factor (Qᵤ), whereas when the amount of BaO exceeds 62.6 mol % difficulty is encountered in sintering and the dielectric ceramic composition fails to exhibit a sufficiently high unloaded quality factor (Qᵤ).

When the amount of ZnO is less than 16.0 mol% or exceeds 22.2 mol% the dielectric ceramic composition fails to exhibit a sufficiently high unloaded quality factor (Qᵤ).

When Nb₂O₅ is absent the firing temperature is higher compared to when Nb₂O₅ is present, whereas when the amount of Nb₂O₅ exceeds 20.6 mol% the dielectric ceramic composition fails to exhibit a sufficiently high unloaded quality factor (Qᵤ).

When Ta₂O₅ is absent or the amount of Ta₂O₅ exceeds 20.6 mol% the dielectric ceramic composition fails to exhibit a sufficiently high unloaded quality factor (Qᵤ).

When Sb₂O₃ is absent the dielectric ceramic composition fails to exhibit a sufficiently high unloaded quality factor (Qᵤ), whereas when the amount of Sb₂O₃ exceeds 5.90 mol% difficulty is encountered in sintering.

The dielectric ceramic composition of the invention contains Ba, Zn, Nb, Ta, and Sb and alkali metal as essential components.

Specific examples include Li, Na, K, Rb, Cs and Fr. Of these, Na and K are preferred, and K is especially preferred. The alkali metal serves to lower the firing temperature during production of the composition. Especially when K is incorporated into the composition, even if the firing temperature is low, the resultant composition exhibits well-balanced dielectric characteristics, i.e. high relative dielectric constant (εᵣ), high unloaded quality factor (Qᵤ) and low absolute value of the temperature coefficient (τ_{f}).

The mol % amount of the alkali metal, as its oxide, is
0 < M₂O ≤ 1.95
preferably
0.1 ≤ M₂O ≤ 1.0

When the alkali metal is absent the dielectric ceramic composition exhibits a low unloaded quality factor (Qᵤ), whereas when the amount of the alkali metal exceeds 1.95 mol%, difficulty is encountered in sintering and the composition may exhibit a low unloaded quality factor (Qᵤ).

The dielectric ceramic composition of the present invention may be produced by mixing together the raw materials, calcining the resultant mixture if desired, and molding the calcined product followed by firing. During molding, a binder may be employed.

Examples of the raw materials include oxides of the required metals; and peroxides, hydroxides, carbonates, nitrates and sulfates of the required metals, which can be formed into oxides of the metals through firing. Preferred examples of the raw materials include barium oxide, barium hydroxide, barium carbonate, zinc oxide, zinc hydroxide, zinc carbonate, niobium oxide, niobium hydroxide, niobium carbonate, tantalum oxide, tantalum hydroxide, tantalum carbonate, antimony oxide, antimony hydroxide and antimony carbonate. Of these, the oxides of the five metals are preferred. The dielectric ceramic composition of the present invention may contain an additional metallic component provided that the objects of the present invention can be achieved.

The raw materials are generally employed in the form of powders. The powdery raw materials are weighed such that the amounts of the metals satisfy the above conditions. The raw materials are dry-mixed together for 20 to 30 minutes using, for example, a mixer, and then subjected to primary crushing using, for example, a vibration mill. Generally, resin balls or zirconia balls are employed for grinding. The crushing time is generally 2 to 4 hours. In general, water is added to the powdery raw materials, and the raw materials are crushed until the average particle size of the powder is 2.0 µm or less. However, no particular limitations are imposed on the crushing conditions.

The resulting mixture is then dried and, if desired, the dry mixture is calcined at 1,000 to 1,300°C for, for example, 2 to 10 hours. No particular limitations are imposed on the calcining conditions.

Subsequently, if desired, a molding binder is added to the calcined product. The resultant product is subjected to particle size regulation, and then molded into shaped article. The binder is preferably a water-soluble polymer. Examples of the polymer include polyvinyl alcohol, polyvinyl pyrrolidone, polyacrylic acid, polyacrylamide, polyethylene oxide, polyethyleneimine and carboxymethyl cellulose. No particular limitations are imposed on the amount of the binder, but the amount is typically 1 to 10, preferably 3 to 7, parts by weight, based on 100 parts by weight of the calcined product.

Molding may be achieved by, for example, mold pressing, cold isostatic pressing and extrusion molding. After molding, the molded product is subjected to treatment for removing the binder. Conditions for removing the binder will depend upon the type of binder but, generally, involve heating the molded product to a temperature higher than the decomposition temperature of the binder.

The dielectric ceramic composition of the present invention is produced by firing the molded product in an oxidative atmosphere (e.g., air) or a non-oxidative atmosphere, typically at 1,300 to 1,700°C, preferably 1,500 to 1,600°C, for 0.5 to 12 hours, preferably 1 to 10 hours.

When it is used in a high-frequency region, the dielectric ceramic composition of the present invention exhibits a high unloaded quality factor (Qᵤ) of at least 4,000 (5 GHz), a relative dielectric constant (εᵣ) of 20 to 40, and a temperature coefficient (τ_{f}) of resonance frequency (fₒ) of -20 to 20. More preferably the composition exhibits a high unloaded quality factor (Qᵤ) of 4,400 or more, and a temperature coefficient (τ_{f}) of resonance frequency (fₒ) of -10 to 10.

The unloaded quality factor (Qᵤ) is an index of the amount of energy accumulated in a resonator; i.e., the degree of dielectric loss of the dielectric ceramic composition, and is measured by the method specified in JIS R1627 (1996).

The relative dielectric constant (εᵣ) is a real number portion of the complex relative dielectric constant, and is determined through the method specified in JIS R1627 (1996).

The temperature coefficient (τ_{f}) of resonance frequency (fₒ) indicates the temperature dependency of resonance frequency, and is calculated using the formula: τ_{f} = (l/f₁)[(f₂ - f₁)/(T₂ - T₁)] × 10⁶, in which f₁ represents resonance frequency at T₁°C, and f₂ represents resonance frequency at T₂°C, and is measured by the method of JIS R1627 (1996).

The dielectric ceramic composition of the present invention exhibits excellent characteristics as described above, and is therefore suitable for use in, for example, dielectric microwave resonators, substrates for microwave integrated circuits and impedance regulators of microwave circuits.

In recent years, mobile communication systems such as car telephones and cellular phones have rapidly become prevalent, and communication systems employing microwaves, such as satellite broadcasting systems and satellite communication systems, have been developed. In accordance with this trend, demand has arisen for reducing the size of devices employed in such communications systems, such as band-pass filters, and for increasing the frequency range within which the devices are employed.

By virtue of their high frequencies, microwaves are employed as carrier waves for transmitting a large number of signals, and microwaves are suitable for use in multiplex communications in which radio waves of predetermined single frequency carry signals of hundreds to thousands of lines simultaneously. Dielectric resonators are widely employed in circuit devices which play an important role for receiving or transmitting such signals at the predetermined frequency.

The dielectric resonator of the present invention, which resonates at a specific frequency, may be usefully employed in such devices. In the dielectric resonator of the present invention, electromagnetic waves are reflected almost completely at the interface between the free space and the dielectric main body, electromagnetic energy is confined within the dielectric main body and standing waves are generated.

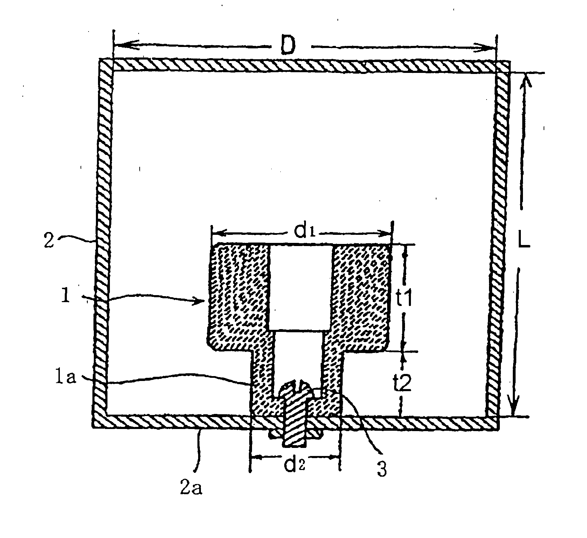

In the accompanying drawing there is shown an example of a dielectric resonator according to the present invention. In the drawing, reference numeral 1 denotes a resonator main body equipped with a support 1a, 2 a cylindrical metallic container, 2a is the bottom surface of the metallic container and 3 is a fastening member. The resonator main body 1 is formed from the dielectric ceramic composition of the present invention.

The resonator main body 1 is located in the cylindrical metallic container 2 and is mounted centrally on the bottom 2a of the container on its support 1a and connected by the fastening member 3 (e.g., a bolt and a nut) through a central hole in the bottom 2a.

The resonator main body 1 is produced from a molded product formed from the dielectric ceramic composition of the present invention. The molded product is formed to a predetermined shape in the molding step. In the production of the resonator, the raw materials are mixed together, the mixture is calcined if desired, and the calcined product is subjected to molding, followed by firing.

The dielectric resonator of the present invention exhibits a high unloaded quality factor (Qᵤ) and permits arbitrary regulation of relative dielectric constant (εᵣ) and the temperature coefficient (τ_{f}) of resonance frequency (fₒ) within specific ranges. The dielectric resonator is therefore highly suitable for use in multiplex communications, in which carrier waves are employed for transmitting a large number of signals, and radio waves of predetermined single frequency carry signals of hundreds to thousands of lines simultaneously.

The following Examples illustrate the invention.

### Examples 1 to 5 and Comparative Examples 1 to 13

Powdery raw materials in the amounts shown in Table 1 were dry-mixed for three hours and the resulting mixture was subjected to primary crushing. The mixture was then calcined in an air atmosphere at 1,200°C for two hours. Subsequently, polyvinyl alcohol (8 weight %) serving as a binder and water (92 weight %) were added to the calcined powder, and the mixture was subjected to secondary crushing in a ball mill employing zirconia balls (size: 10 mmφ) at 90 rpm for 10 hours. Subsequently, the crushed powder was dried under vacuum (0.4 Torr, 45°C, 20 hours) and thereby granulated. The granulated powder was molded into a cylindrical product (diameter: 19 mm, thickness: 11 mm).

The molded product was thereafter subjected to degreasing in air at 500°C for two hours, followed by firing at 1,550°C for three hours. Table 2 shows compositional proportions of the dielectric ceramic compositions. The circumference and end surfaces of fired product were polished, and the final product was evaluated for dielectric characteristics. The results are shown in Table 3.

The polished test pieces (diameter: 16 mm, height: 8 mm) were subjected to measurement of unloaded quality factor (Qᵤ), relative dielectric constant (εᵣ) and temperature coefficient (τ_{f}) (temperature range: 25 to 80°C) at a frequency of 5 GHz by the parallel conductive plate dielectric resonator method (TE₀₁₁ MODE).

**Table 1**

| | Raw materials (mol%) | | | | | |
|---|---|---|---|---|---|---|
| | BaO | ZnO | Nb₂O₅ | Ta₂O₅ | Sb₂O₃ | K₂O |
| Comparative Example 10 | 60.1 | 19.3 | 10.5 | 8.69 | 1.39 | 0.00 |
| Comparative Example 11 | 59.4 | 19.1 | 18.6 | 0.75 | 0.98 | 1.13 |
| Comparative Example 12 | 59.4 | 19.1 | 16.7 | 2.71 | 0.98 | 1.13 |
| Example 1 | 59.4 | 19.1 | 12.7 | 6.63 | 0.98 | 1.13 |
| Comparative Example 13 | 59.4 | 19.1 | 12.4 | 8.59 | 0.47 | 1.13 |
| Example 2 | 59.4 | 19.1 | 10.8 | 8.59 | 0.98 | 1.13 |
| Example 3 | 59.4 | 19.1 | 10.4 | 8.59 | 1.37 | 1.13 |
| Example 4 | 59.4 | 19.1 | 9.6 | 8.59 | 2.16 | 1.13 |
| Example 5 | 59.4 | 19.1 | 6.5 | 12.51 | 1.37 | 1.13 |
| Comparative Example 1 | 54.4 | 22.0 | 11.9 | 9.71 | 2.06 | 0.00 |
| Comparative Example 2 | 63.0 | 17.8 | 9.6 | 7.87 | 1.67 | 0.00 |
| Comparative Example 3 | 60.8 | 14.6 | 13.4 | 9.32 | 1.98 | 0.00 |
| Comparative Example 4 | 58.0 | 23.8 | 8.0 | 8.42 | 1.79 | 0.00 |
| Comparative Example 5 | 57.3 | 16.2 | 22.2 | 2.77 | 1.52 | 0.00 |
| Comparative Example 6 | 57.0 | 16.7 | 3.8 | 20.79 | 1.67 | 0.00 |
| Comparative Example 7 | 60.3 | 19.3 | 18.9 | 0.00 | 1.45 | 0.00 |
| Comparative Example 8 | 60.0 | 19.6 | 11.6 | 8.75 | 0.00 | 0.00 |
| Comparative Example 9 | 56.3 | 18.4 | 10.9 | 8.21 | 6.22 | 0.00 |

**Table 2**

| | Dielectric ceramic compositions (mol%) | | | | | |
|---|---|---|---|---|---|---|
| | BaO | ZnO | Nb₂O₅ | Ta₂O₅ | Sb₂O₃ | K₂O |
| Comparative Example 10 | 60.2 | 18.9 | 10.2 | 8.63 | 2.01 | 0.000 |
| Comparative Example 11 | 60.3 | 18.9 | 18.4 | 0.76 | 1.44 | 0.246 |
| Comparative Example 12 | 60.2 | 18.9 | 16.4 | 2.73 | 1.43 | 0.246 |
| Example 1 | 60.3 | 19.0 | 12.4 | 6.42 | 1.57 | 0.286 |
| Comparative Example 13 | 59.7 | 18.6 | 13.5 | 9.01 | 0.73 | 0.236 |
| Example 2 | 61.0 | 17.9 | 11.1 | 8.65 | 1.12 | 0.171 |
| Example 3 | 60.2 | 19.1 | 10.2 | 8.53 | 1.81 | 0.146 |
| Example 4 | 60.0 | 19.2 | 9.7 | 8.67 | 2.18 | 0.247 |
| Example 5 | 60.0 | 18.9 | 6.4 | 12.52 | 2.00 | 0.245 |
| Comparative Example 1 | 54.9 | 21.7 | 11.6 | 9.71 | 2.06 | 0.000 |
| Comparative Example 2 | 63.5 | 17.6 | 9.4 | 7.86 | 1.67 | 0.000 |
| Comparative Example 3 | 61.2 | 14.4 | 13.1 | 9.30 | 1.97 | 0.000 |
| Comparative Example 4 | 58.5 | 23.5 | 7.9 | 8.41 | 1.78 | 0.000 |
| Comparative Example 5 | 57.9 | 16.0 | 21.8 | 2.77 | 1.52 | 0.000 |
| Comparative Example 6 | 57.4 | 16.5 | 3.7 | 20.73 | 1.67 | 0.000 |
| Comparative Example 7 | 60.9 | 19.1 | 18.5 | 0.00 | 1.45 | 0.000 |
| Comparative Example 8 | 60.5 | 19.4 | 11.4 | 8.74 | 0.00 | 0.000 |
| Comparative Example 9 | 56.7 | 18.2 | 10.7 | 8.20 | 6.20 | 0.000 |

**Table 3**

| | Qᵤ (5 GHz) | εᵣ | τ_{f} (x10⁻⁶/°C) |
|---|---|---|---|
| Comparative Example 10 | 4201 | 29.6 | 5.1 |
| Comparative Example 11 | 4360 | 34.0 | 19.9 |
| Comparative Example 12 | 4359 | 33.7 | 17.2 |
| Example 1 | 4558 | 31.8 | 9.7 |
| Comparative Example 13 | 4250 | 32.2 | 13.5 |
| Example 2 | 4845 | 31.1 | 7.2 |
| Example 3 | 4975 | 30.1 | 5.9 |
| Example 4 | 4965 | 28.5 | -1.9 |
| Example 5 | 5335 | 29.1 | -0.9 |
| Comparative Example 1 | 3877 | 30.0 | 5.5 |
| Comparative Example 2 | 3952 | 30.4 | 7.0 |
| Comparative Example 3 | 3549 | 29.0 | 3.6 |
| Comparative Example 4 | 3270 | 30.6 | 8.3 |
| Comparative Example 5 | 2914 | 32.1 | 4.6 |
| Comparative Example 6 | 3755 | 30.8 | -2.7 |
| Comparative Example 7 | 3886 | 34.5 | 23.3 |
| Comparative Example 8 | 3669 | 33.2 | 21.4 |
| Comparative Example 9 | 3976 | 23.1 | -25.9 |

It is clear from the results shown in Table 3 that the dielectric ceramic composition of the present invention exhibits a high unloaded quality factor (Qᵤ) and has relative dielectric constant (εᵣ) and temperature coefficient (τ_{f}) of resonance frequency (fₒ) within wide ranges.

### Example 10

A dielectric resonator as shown in the accompanying drawing and as described above with reference to the drawing, was produced from the dielectric ceramic composition obtained in Example 6.

The dimensions of the resonator shown in the accompanying drawing were determined such that the resonance frequency was 1,770 MHz in a TE_{01δ} mode; specifically D was 80 mm; L, 70 mm; d₁, 38 mm; d₂, 32 mm; l₁, 17 mm; and 12, 20 mm. Qᵤ was measured and found to be 40,518.

## Claims

1. A dielectric ceramic composition comprising, as metallic components, Ba, Zn, Nb, Ta, and Sb, **characterized in that** the mol % amounts of the metallic components as their oxides are:
57.6 ≤ BaO ≤ 61.5
17.0 ≤ 2nO ≤ 20.0
6.0 ≤ Nb₂O₅ ≤ 17.0
6.0 ≤ Ta₂O₅ ≤ 13.0
1.0 ≤ Sb₂O₃ ≤ 2.3
and the composition further comprises an alkali metal (M) as a further metallic component, wherein the mol % amount of the alkali metal as its oxide is
0 < M₂O ≤ 1.95
and the total mol % of all metallic oxides is 100.

2. A composition according to claim 1, wherein the alkali metal is K.

3. A composition according to any one of claim 1 to 2, exhibiting a high unloaded quality factor (Qᵤ) of 4,000 or more, a relative dielectric constant (εᵣ) of 20 to 40 and a temperature coefficient (τ_{f}) of resonance frequency (fₒ) of -20 to 20.

4. A dielectric resonator comprising a resonator main body formed from a dielectric ceramic composition according to any one of claims 1 to 3.

## Patentansprüche

1. Dielektrische Keramikzusammensetzung umfassend, als Metallkomponenten, Ba, Zn, Nb, Ta und Sb, **dadurch gekennzeichnet, dass** die Mol-%-Mengen der Metallkomponenten als ihre Oxide:
57,6 ≤ BaO ≤ 61,5
17,0 ≤ Zn0 ≤ 20,0
6,0 ≤ Nb₂O₅ ≤ 17,0
6,0 ≤ Ta₂O₅ ≤ 13,0
1,0 ≤ Sb₂O₃ ≤ 2,3
betragen und die Zusammensetzung des Weiteren ein Alkalimetall (M) als weitere Metallkomponente umfasst, wobei die Mol-%-Menge des Alkalimetalls als dessen Oxid
0 < M₂O ≤ 1,95
beträgt und der gesamte Molprozentsatz aller Metalloxide 100 beträgt.

2. Zusammensetzung nach Anspruch 1, wobei das Alkalimetall K ist.

3. Zusammensetzung nach einem der Ansprüche 1 bis 2, die einen hohen unbelasteten Qualitätsfaktor (Qu) von 4.000 oder mehr, eine relative Dielektrizitätskonstante (εᵣ) von 20 bis 40 und einen Temperaturkoeffizienten (τ_{f} ) der Resonanzfrequenz (fₒ) von -20 bis 20 aufweist.

4. Dielektrischer Resonator umfassend einen Resonatorhauptkörper, der aus einer dielektrischen Keramikzusammensetzung nach einem der Ansprüche 1 bis 3 gebildet ist.

## Revendications

1. Composition céramique diélectrique comprenant, en tant que composants métalliques, Ba, Zn, Nb, Ta et Sb, **caractérisée en ce que** les quantités molaires en % des composants métalliques sous forme de leurs oxydes sont les suivantes :
57,6 ≤ BaO ≤ 61,5
17,0 ≤ ZnO ≤ 20,0
6,0 ≤ Nb₂O₅ ≤ 17,0
6,0 ≤ Ta₂O₅ ≤ 13,0
1,0 ≤ Sb₂O₃ ≤ 2,3
et la composition comprend en outre un métal alcalin (M) en tant qu'autre composant métallique, où la quantité molaire en % du métal alcalin sous forme de son oxyde est la suivante
0 < M₂O ≤ 1,95
et le pourcentage molaire total de l'ensemble des oxydes métalliques est de 100.

2. Composition selon la revendication 1, dans laquelle le métal alcalin est du K.

3. Composition selon l'une quelconque des revendications 1 ou 2, présentant un facteur de qualité non chargé élevé (Qᵤ) de 4000 ou plus, une constante diélectrique relative (εᵣ) de 20 à 40, et un coefficient de température (τᵣ) de fréquence de résonance (f₀) de -20 à 20.

4. Résonateur diélectrique comprenant un corps principal de résonateur formé d'une composition céramique diélectrique selon l'une quelconque des revendications 1 à 3.
